Europäisches Patentamt

European Patent Office

Office européen des brevets

(19)

(11) **EP 0 880 290 A1**

(12) **DEMANDE DE BREVET EUROPEEN**

(43) Date de publication:
25.11.1998 Bulletin 1998/48

(51) Int. Cl.$^6$: **H04Q 1/46**

(21) Numéro de dépôt: 98201622.2

(22) Date de dépôt: 15.05.1998

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **23.05.1997 FR 9706338**

(71) Demandeur:
**Koninklijke Philips Electronics N.V.
5621 BA Eindhoven (NL)**

(72) Inventeurs:
• **Auroux, Elisabeth
75008 Paris (FR)**
• **Sandre, Benoît
75008 Paris (FR)**

(74) Mandataire: **Landousy, Christian
Société Civile S.P.I.D.
156, Boulevard Haussmann
75008 Paris (FR)**

(54) **Méthode de détection d'une tonalité DTMF, ainsi que dispositif de détection et appareil téléphonique pour sa mise en oeuvre**

(57) Pour permettre dans un appareil téléphonique la distinction entre une interrogation du répondeur à distance et un simple message vocal, l'invention concerne un détecteur DTMF dans lequel on détermine la puissance maximale du signal respectivement dans le groupe des quatre fréquences DTMF les plus basses et dans celui des quatre les plus hautes, puis l'on compare dans un circuit de décision (51) la somme desdites deux puissances à la puissance totale du signal, une tonalité DTMF étant considérée comme présente en cas d'égalité.
Application : téléphones répondant à la norme DECT.

FIG. 3

EP 0 880 290 A1

**Description**

La présente invention concerne une méthode de détection d'une tonalité DTMF, ainsi qu'un dispositif de détection et un appareil téléphonique pour la mise en oeuvre de cette méthode. Cette invention est applicable notamment dans le domaine des téléphones avec répondeur de type numérique, par exemple ceux répondant à la norme DECT, ainsi que, de façon générale, pour la détection de tonalités similaires composées de plusieurs ondes sinusoïdales.

Lorsqu'un appareil téléphonique est équipé d'un répondeur, il existe la possibilité, pour le propriétaire de l'appareil, d'interroger son répondeur à distance. L'appareil est, à cet effet, équipé d'un décodeur DTMF. Les signaux DTMF, de l'anglais Dual-Tone Multi-Frequency, sont normalisés et correspondent aux huit fréquences suivantes : 697 Hz, 770 Hz, 852 Hz, 941 Hz, 1209 Hz, 1336 Hz, 1477 Hz, 1633 Hz, réparties en deux groupes dits haut et bas. Pour l'interrogation à distance, on utilise un traitement numérique permettant de faire la distinction entre un véritable appel pour interrogation à distance, qui comprend effectivement des tonalités DTMF et elles seules exclusivement, et un appel ordinaire d'un correspondant qui laisse sur le répondeur un message vocal riche de fréquences de toutes sortes, entre autres des fréquences harmoniques des fréquences DTMF citées plus haut. On dit alors que l'on a réalisé ce que l'on appelle l'immunité à la parole, qui évite de détecter fortuitement des tonalités DTMF dans un simple message vocal. Pour qu'une telle distinction soit possible, on peut par exemple prévoir de contrôler, lorsque la présence d'une tonalité DTMF est supposée présente, si des fréquences harmoniques correspondantes sont également présentes : si oui, le signal entrant dans l'appareil est un simple message vocal, alors qu'au contraire l'absence de toute fréquence harmonique permet de confirmer qu'il s'agit d'un appel d'interrogation à distance. Cette solution est cependant relativement coûteuse en taille mémoire.

Dans le brevet des Etats-Unis d'Amérique n° 5119322, il est mentionné un détecteur de signaux DTMF selon lequel une tonalité DTMF particulière est considérée comme présente ou absente selon que le niveau d'énergie pondéré associé au signal est supérieur ou inférieur à un seuil déterminé. Cette méthode n'est cependant pas appropriée à la situation où il faut non plus détecter la présence, ou non, d'une tonalité DTMF, mais distinguer entre un message vocal, qui pourrait contenir intempestivement des signaux pouvant être confondus avec des tonalités DTMF, et un signal d'interrogation à distance, qui ne contient que des tonalités DTMF.

Un but de l'invention est donc de proposer une méthode permettant de résoudre ce type de problème.

A cet effet l'invention concerne une méthode de détection d'une tonalité dite DTMF après échantillonnage fréquentiel de ce signal, ladite méthode incluant une étape de calcul comprenant les sous-étapes suivantes :

a) recherche, dans le groupe bas des fréquences DTMF, de celle des quatre fréquences à laquelle est associée la puissance maximale dans le signal d'entrée ;
(b) recherche, dans le groupe haut desdites fréquences, de celle des quatre fréquences à laquelle est associée la puissance maximale dans le signal d'entrée ;
(c) comparaison de la somme desdites puissances maximales à la puissance totale du signal d'entrée, et décision relative audit signal, considéré comme une tonalité DTMF pure seulement si ladite somme est pratiquement égale à ou du même ordre de grandeur que cette puissance totale.

Le principe ainsi proposé est relativement peu onéreux en temps de calcul et en taille mémoire, et en outre d'application tout à fait générale, puisqu'il peut être également utilisé dans d'autres situations que l'interrogation à distance, en fait dans toute situation où des fréquences définies de façon précise doivent être détectées dans un signal.

L'invention concerne également un dispositif de détection de tonalité DTMF pour la mise en oeuvre de la méthode présentée ci-dessus, ainsi qu'un appareil téléphonique équipé d'un tel dispositif de détection.

Le document US 5428680 décrit bien un appareil qui comprend des dispositifs de détermination de puissance, mais leur utilisation est différente de celle observée dans le cas de la présente invention. Alors que, dans ce document, le niveau de puissance associé à la fréquence pour laquelle il est le plus élevé dans chaque groupe (bas et haut) est comparé seulement au niveau de puissance global dans chaque groupe concerné (bas ou haut), en vue d'une validation d'un code de reconnaissance DTMF seulement si les deux comparaisons sont concluantes, dans le cas de la solution technique ici décrite la puissance correspondant à la somme des deux puissances les plus élevées dans chaque groupe est comparée à une puissance mesurée sur une plus large bande, correspondant à la totalité de la bande possible du signal d'entrée.

Ainsi, un signal qui aurait pu être considéré comme un signal DTMF mais qui inclut une troisième composante de fréquence inférieure à 600 Hz ou supérieure à 1700Hz est rejeté lorsque la méthode conforme à l'invention est utilisée. Ce résultat n'aurait pas pu être obtenu avec l'appareil décrit dans le document cité, puisque les dispositifs de détermination de puissance y sont connectés aux sorties des filtres passe-bas et ne peuvent donc pas prendre en compte la part de puissance correspondant à une éventuelle troisième composante située dans les bandes de fréquence 300-600 Hz et 1700-3400 Hz. La méthode et le dispositif de détection de tonalité DTMF selon l'invention présentent donc une efficacité accrue contre des détections erronées de signaux DTMF.

L'invention sera mieux comprise à l'aide de la description suivante et des dessins annexés, donnés à titre d'exemple non limitatif et dans lesquels :

- la figure 1 montre la structure du décodeur DTMF ;
- la figure 2 montre un circuit de filtrage récursif prévu dans le décodeur ;
- la figure 3 montre un circuit de calcul pour la mise en oeuvre du principe conforme à l'invention.

Dans les appareils téléphoniques auxquels l'invention est applicable, les signaux à traiter passent par l'interface avec la ligne téléphonique. Un décodeur DTMF est placé en aval de cette interface, pour la mise en oeuvre de la méthode proposée.

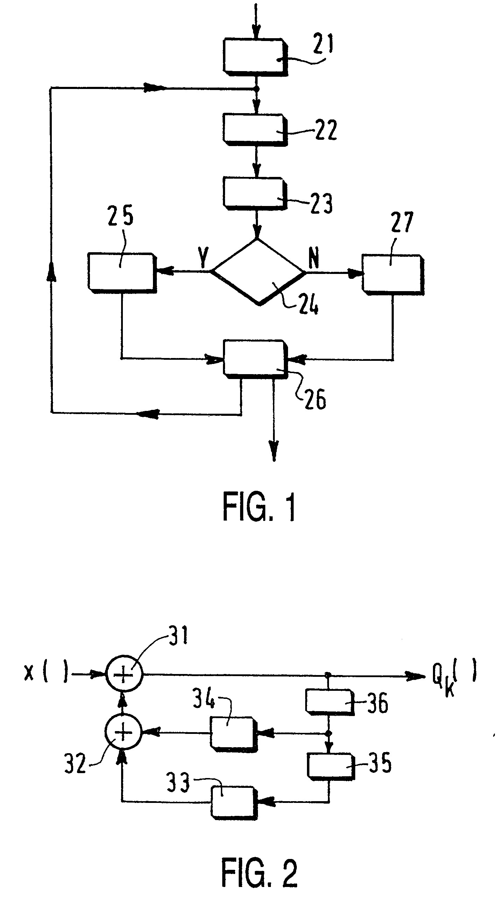

Ce décodeur DTMF, illustré sur la figure 1, comprend un circuit 21 de prélèvement des échantillons de signal nécessaires (le signal entrant, dont on veut vérifier s'il s'agit réellement d'un signal d'interrogation à distance ou bien d'un simple message vocal destiné au répondeur), puis un étage en boucle 22 à 27 constitué de la façon indiquée ci-dessous, et mis en oeuvre huit fois (une fois pour chacune des fréquences DTMF).

Chaque échantillon du signal d'entrée est reçu par un circuit 22 de contrôle automatique de gain, suivi d'un circuit 23 de calcul de puissance, puis d'un premier compteur 24 du nombre d'échantillons traités. Tant que ce nombre reste inférieur au total N des échantillons à traiter (80 dans l'exemple ici décrit), une étape de calcul en boucle, réalisée ici par un premier circuit de calcul 25, permet de calculer un signal intermédiaire $Q_k(n)$ pour n variant de 0 à N-1. Ce circuit 25 comprend, comme indiqué sur la figure 2 reprise de la figure 2 du document cité, un premier additionneur 31 qui, pour délivrer ledit signal intermédiaire $Q_k(n)$, reçoit sur une première entrée l'échantillon d'entrée x(n) et sur une deuxième entrée la sortie d'un deuxième additionneur 32. Celui-ci reçoit lui-même, sur ses deux entrées, les sorties respectives d'un amplificateur 33 et d'un amplificateur 34. Deux mémoires 35 et 36 permettent de retarder la sortie $Q_k(n)$ du premier additionneur 31 et de disposer, à l'entrée du premier amplificateur 33, du signal intermédiaire $Q_k(n-2)$ et, à l'entrée du deuxième amplificateur 34, du signal intermédiaire $Q_k(n-1)$. Les gains des amplificateurs 33 et 34 sont respectivement égaux à G1 = -1 et à G2 = $2\cos(k.2^{\pi/N})$. Le signal de sortie du circuit de calcul 25 est donc donné par l'expression :

$$Q_k(n) = G1.Q_k(n-2) + G2.Q_k(n-1) + x(n) \qquad (1)$$

Ce signal est envoyé vers un deuxième compteur 26 du nombre d'échantillons traités. Tant que ce nombre est inférieur à N, la sortie du circuit 26 est renvoyée vers l'entrée du circuit 22, afin de renouveler le traitement précédemment décrit pour les N-1 échantillons suivants. Dès que le nombre N est atteint, le précédent calcul en boucle est remplacé par un ultime calcul réalisé par un deuxième circuit de calcul 27.

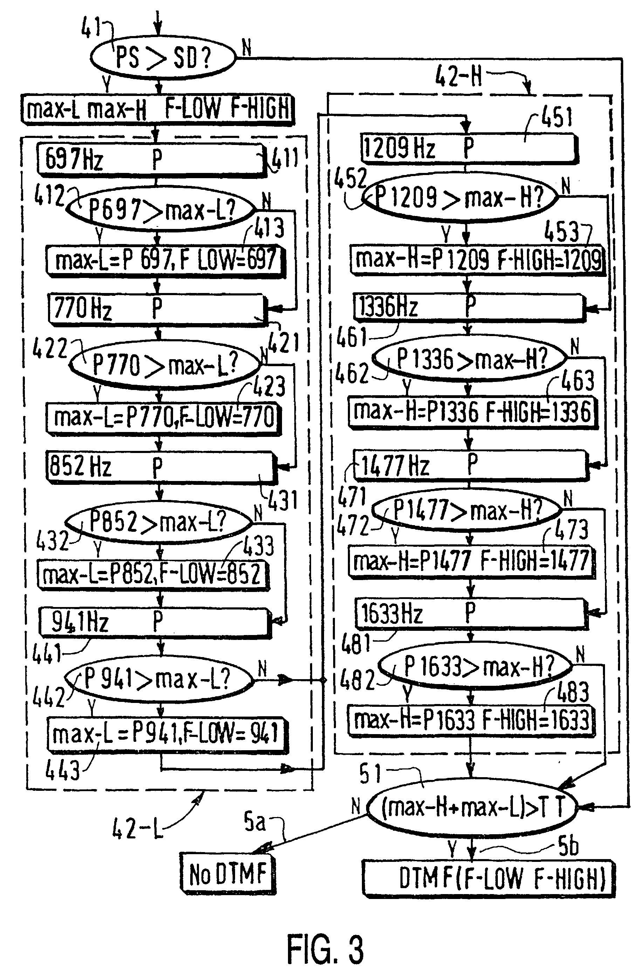

Ce circuit de calcul 27, représenté sur la figure 3, comprend, conformément à l'invention, les éléments suivants. Un circuit 41 permet tout d'abord de vérifier, par comparaison, si la puissance du signal présent à l'entrée du circuit de calcul 27 est supérieure, ou non, à une valeur de seuil prédéterminée, dite seuil de détection SD.

Si cette puissance est inférieure au seuil, le traitement est terminé : on considère qu'il y a absence de tonalité DTMF (cette absence est indiquée par : NO DTMF). Si au contraire, la puissance est supérieure au seuil, ledit signal d'entrée est fourni à un étage de comparaison 42 dans lequel, pour chacun des deux groupes de fréquences cités plus haut, on va rechercher la puissance maximale totale du signal d'entrée (le groupe bas correspondant aux fréquences 697 Hz, 770 Hz, 852 Hz, 941 Hz, et le groupe haut aux fréquences 1209 Hz, 1336 Hz, 1477 Hz, 1633 Hz), respectivement dans un sous-étage 42-L et dans un sous-étage 42-H.

Le sous-étage 42-L comprend (après initialisation de deux registres F-LOW et F-HIGH et un seuil fondamental FT, fonction de la puissance totale du signal, puis définition, dans deux autres registres, de deux grandeurs max-L et max-H = FT pour chacun des deux groupes respectivement) un premier circuit 411 de calcul de la puissance P697 du signal autour de la première fréquence (697 Hz), un premier comparateur 412 de la puissance P697 ainsi calculée au seuil max-L, et, si cette puissance est supérieure audit seuil, un premier registre 413 de mémorisation d'une part de ladite puissance dans le registre max-L et d'autre part de ladite fréquence correspondante. Si la puissance P697 est inférieure au seuil, aucune modification des informations mémorisées (max-L, F-LOW) n'est effectuée, et l'on passe directement au renouvellement des mêmes opérations (calcul et comparaison des puissances P770, P852, P941 au seuil max-L) successivement pour les trois autres fréquences du groupe bas. Ces opérations sont alors effectuées dans des circuits 421, 422, 423 pour la fréquence 770 Hz, dans des circuits 431, 432, 433 pour la fréquence 852 Hz, et dans des circuits 441, 442, 443 pour la fréquence 941 Hz.

Ces opérations sont ensuite reprises successivement pour les fréquences du groupe haut (calcul et comparaison des puissances P1209, P1336, P1477, P1633), dans des circuits 451, 452, 453 pour la fréquence 1209 Hz, dans des circuits 461, 462, 463 pour la fréquence 1336 Hz, dans des circuits 471, 472, 473 pour la fréquence 1477 Hz, et dans des circuits 481, 482, 483 pour la fréquence 1633 Hz. Pour les quatre fréquences du groupe bas, le seuil de comparaison de la puissance calculée était max-L (dans les comparateurs 412, 422, 432, 442), alors que, dans les comparateurs 452, 462, 472, 482 prévus pour le groupe haut, ce seuil est max-H.

A la suite de ces huit comparaisons, les informations mémorisées max-L et max-H contiennent l'information de puissance correspondant, si une tonalité DTMF est présente, à chacune des deux fréquences correspondant à cette tonalité (l'une dans le groupe bas, l'autre dans le groupe haut). En comparant la somme ( max- L + max-H ) à un seuil total TT, fonction de la puissance totale du signal, dans un circuit de décision 51, il est ainsi possible de vérifier si cette somme de puissances (correspondant aux deux fréquences associées à une tonalité déterminée) est du même ordre que la puissance totale du signal d'entrée (ce qui signifie que cette tonalité DTMF est présente) ou au contraire qu'elle lui est nettement inférieure (ce qui correspond à l'absence de cette tonalité). Le circuit de décision 51 délivre alors l'une ou l'autre de ces deux indications (absence/présence de tonalité DTMF) sur deux sorties correspondantes 5a et 5b.

## Revendications

1. Méthode de détection d'une tonalité dite DTMF après échantillonnage fréquentiel d'un signal d'entrée, ladite méthode incluant une étape de calcul comprenant les sous-étapes suivantes :

    a) recherche, dans le groupe bas des fréquences DTMF, de celle des quatre fréquences à laquelle est associée la puissance maximale dans le signal d'entrée ;
    (b) recherche, dans le groupe haut desdites fréquences, de celle des quatre fréquences à laquelle est associée la puissance maximale dans le signal d'entrée ;
    (c) comparaison de la somme desdites puissances maximales à la puissance totale du signal d'entrée, et décision relative audit signal, considéré comme une tonalité DTMF pure seulement si ladite somme est pratiquement égale à ou du même ordre de grandeur que cette puissance totale.

2. Dispositif de détection d'une tonalité dite DTMF après échantillonnage fréquentiel préalable d'un signal d'entrée, caractérisé en ce qu'il comprend un circuit de calcul d'énergie aux fréquences DTMF, comprenant lui-même :

    a) un circuit de comparaison de la puissance du signal d'entrée dudit circuit de calcul d'énergie et d'un premier seuil ;
    b) un étage de comparaison composé lui-même, en série, d'un premier sous-étage et d'un deuxième sous-étage (42-H), ledit premier sous-étage comprenant, pour la détermination de la puissance maximale dans le groupe des quatre fréquences les plus basses, quatre sous-ensembles successifs composés chacun en série d'un circuit de calcul de la puissance autour d'une fréquence, d'un comparateur de cette puissance à un premier seuil max-L et, si cette puissance est supérieure audit seuil, de mémorisation de cette puissance et de la fréquence correspondante, et ledit deuxième sous-étage comprenant quatre autres sous-ensembles semblables, pour une détermination similaire, avec comparaison à un deuxième seuil max-H, de la puissance maximale dans le groupe des quatre fréquences les plus hautes, lesdits premier et deuxième seuils étant fonction de la puissance totale du signal ;
    c) un circuit de décision, pour la comparaison de la somme des deux puissances ainsi obtenues pour les deux groupes et de la puissance totale du signal d'entrée, une tonalité DTMF étant considérée comme effectivement détectée dans le signal d'entrée si cette somme est pratiquement égale à ou du même ordre de grandeur que ladite puissance totale.

3. Appareil téléphonique équipé d'un dispositif de détection d'une tonalité DTMF selon la revendication 2.

21

22

23

25 27

Y N

24

26

FIG. 1

31

$x(\ )$ $q_k(\ )$

34 36

32

35

33

FIG. 2

FIG. 3

EP 0 880 290 A1

Office européen
des brevets

**RAPPORT DE RECHERCHE EUROPEENNE**

Numéro de la demande

EP 98 20 1622

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US 5 428 680 A (MURATA YASUMOTO ET AL) <br> * colonne 3, ligne 31 - colonne 5, ligne 4 * <br> --- | 1-3 | H04Q1/46 |
| A | US 4 599 495 A (RICHARDS ROBERT D) <br> --- | 1-3 | |
| A | US 5 588 053 A (XIE ZHENG-YI) <br> --- | | |
| A | EP 0 575 725 A (VMX INC) <br> --- | | |
| A | US 4 979 214 A (HAMILTON CHRIS A) <br> --- | | |
| A | EP 0 746 170 A (AT & T CORP) <br> ----- | | |

**DOMAINES TECHNIQUES RECHERCHES (Int.Cl.6)**

H04Q

Le présent rapport a été établi pour toutes les revendications

| Lieu de la recherche | Date d'achèvement de la recherche | Examinateur |
|---|---|---|
| LA HAYE | 13 juillet 1998 | Vandevenne, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)